# EUROPÄISCHE PATENTSCHRIFT

(11) **EP 1 433 657 B1**
(45) Veröffentlichungstag und Bekanntmachung des Hinweises auf die Patenterteilung: **19.04.2006**
(21) Anmeldenummer: 03026270.3
(22) Anmeldetag: 14.11.2003
(51) Int. Cl.: B60Q 1/52, B60Q 1/48, G08G 1/16

(54) **System zur Tür-Kollisions-Warnung eines stehenden Kraftfahrzeugs**
System for door collision warning of a stationary vehicle
Système pour avertir d'une collision d'une portière d'un véhicule stationnant

(30) Priorität: 27.12.2002 DE 10261622
(43) Veröffentlichungstag der Anmeldung: 30.06.2004
(73) Patentinhaber: Volkswagen Aktiengesellschaft, 38436 Wolfsburg (DE)
(72) Erfinder: Bartels, Arne, Dr., 38108 Braunschweig (DE)
(74) Vertreter: Meyer, Enno

(56) Entgegenhaltungen:
- EP-A- 0 473 866
- DE-A- 19 933 782
- DE-C- 19 526 452
- US-A- 5 760 708
- US-A1- 2002 030 591
- US-A1- 2002 087 269

## Beschreibung

Die Erfindung betrifft ein zur Warnung vor einer Kollision System eines sich von hinten nähernden Objekts mit einer Tür eines stehenden Kraftfahrzeugs, im folgenden als Tür-Kollisions-Wamung bezeichnet, mit denen der Fahrer eines Kraftfahrzeugs vor dem Öffnen einer Tür des Kraftfahrzeugs gewarnt wird.

Ein Fahrer eines Fahrzeugs kann den Bereich um sein Fahrzeug herum unmittelbar durch die Fahrzeugscheiben und mittelbar durch die Fahrzeugrückspiegel einsehen. Dabei kann der Fahrer durch die Fahrzeugscheiben im wesentlichen den Bereich vor dem Fahrzeug und die Bereiche seitlich vor dem Fahrzeug einsehen, während der Bereich hinter dem Fahrzeug durch den Fahrzeuginnenrückspiegel und die Bereiche seitlich hinter dem Fahrzeug durch einen oder mehrere Fahrzeugaußenrückspiegel einsehbar sind.

Aufgrund des eingeschränkten Blickfelds des Fahrers und der geometrischen Verhältnisse an einem Fahrzeug, d.h. beispielsweise aufgrund von sichtbehindemden Holmen zwischen den Fahrzeugfenstern, ist es dem Fahrer des Fahrzeugs im allgemeinen nicht möglich, alle Bereiche um ein Fahrzeug herum einzusehen, ohne sich umzudrehen oder den Kopf zudrehen. Unmittelbar hinter und vor dem Fahrzeug gibt es Bereiche, die der Fahrer nicht einsehen kann. Ebenso gibt es Bereiche an der Seite des Fahrzeugs, die der Fahrer ohne eine erhebliche Änderung des Blickfelds durch Drehung seines Kopfes nicht einsehen kann. Diese schlecht einsehbaren Bereiche an den Seiten des Fahrzeugs werden als Totwinkelbereiche des Fahrzeugs bezeichnet, wobei dieser Bereich je nach Größe und Sitzposition der Fahrers sowie nach Art und Einstellung der Außenspiegel variiert.

DE 195 26 452 C1 bezieht sich auf eine Seitenrückraumüberwachungseinrichtung mit einer Objekterfassungseinheit zur Erfassung von Objekten in einem Seitenrückraumbereich, einer Wamanzeigeeinheit und einer Auswerteeinheit, welche die Wamanzeigeeinheit in Abhängigkeit von den Signalen der Objekterfassungseinheit und einer erkannten Fahrspurwechselanforderung zur Abgabe eines Wamsignals aktiviert. Die Auswerteeinheit bestimmt, ob sich ein Objekt im Totwinkelabschnitt befindet oder sich ein Objekt in einem rückwärtig darüber hinausreichenden Seitenrückraumabschnitt mit größerer Geschwindigkeit als das eigene Fahrzeug bewegt, und aktiviert bejahendenfalls die Wamanzeigeeinheit zur Abgabe eines Warnsignals. Bei einem stehenden Fahrzeug wird ebenfalls vor einem sich von hinten nähernden Objekt gewarnt, wobei ein Türkontakt zusätzlich zur optischen Anzeige einen Summer beim Vorliegen einer Warnsituation aktiviert.

In diesem Zusammenkung offenbart die EP 0 473 866 A2, ein Warnsignal auszugeben, wenn der Objektabstand kleiner ist als eine Warndistanz, die als Funktion der objektgeschwindigkeit und einer Gesamtreaktionszeit zeit berechnet wird.

Aus der DE 36 22 091 A1 ist ein Fahrbahnwechsel-Wamsystem bekannt, bei dem die Sensoren bei einem abgestellten Fahrzeug die Bereiche seitlich links und rechts neben und hinter dem Fahrzeug überwachen und bei der Erfassung eines ankommenden Fahrzeugs ein optisches oder akustisches Warnsignal ausgeben wird und/oder die Fahrzeugtüren auf der Seite des ankommenden Fahrzeugs blockiert werden. Bei dem System werden IR-Sensoren eingesetzt, so daß auch Fahrradfahrer und Fußgänger mit dem Eintreten in den Überwachungsbereich detektiert werden.

Ferner zeigt die DE 41 19 579 A1 eine in einer Kraftfahrzeugtür angeordnete Abstandsmeßeinrichtung, die mit dem Öffnen der Tür aktiviert wird und eine Türbremse einschaltet, wenn ein Objekt sich in der Reichweite des Sensors befindet.

Schließlich ist aus der US 2002/0030591 ein hollisions-Warnsystem mit drei Systemzuständen bekannt.

Nachteilig bei den bekannten Wameinrichtungen ist es, daß auch vor noch weit entfernten Objekten gewarnt wird und entsprechende Maßnahmen wie Türbremse oder Türverriegelung ergriffen werden.

Der Erfindung liegt daher die Aufgabe zugrunde, eine Verfahren und eine Vorrichtung zur Tür-Kollisions-Warnung mit präzisierter Wamfunktion zu entwickeln.

Diese Aufgabe wird erfindungsgemäß durch ein System nach Anspruch 1 gelöst. Bevorzugte Ausgestaltungen der Erfindung sind Gegenstand der Unteransprüche.

Ein Verfahren zur Warnung eines Fahrers eines stehenden Kraftfahrzeugs vor einer möglichen Kollision eines Objekts mit einer Fahrzeugtür des Kraftfahrzeugs weist die folgenden Schritte auf:
- Überwachen von zumindest dem fahrerseitigen seitlichen Rückraum einer vorgegebenen Breite b und Tiefe a,
- Erfassen eines Objektes in dem zu überwachenden Seitenrückraum,
- Bestimmen des Abstands und der Geschwindigkeit des erfaßten Objekts,
- Berechnen einer Wamdistanz als Funktion der Objektgeschwindigkeit und einer vorgegebenen Gesamtreaktionszeit, und
- Ausgeben eines Warnsignals, wenn der Objektabstand kleiner ist als die Wamdistanz.

Vorzugsweise werden beide Seiten des Kraftfahrzeugs überwacht, wobei insbesondere die Breite eines zu überwachenden Rückraums kleiner oder gleich 3m und die Tiefe eines zu überwachenden Rückraums kleiner oder gleich 35m ist.

Vorzugsweise wird nur vor Objekten gewarnt, die sich dem stehenden Fahrzeug von hinten oder seitlich von hinten nähern. Dies kann realisiert werden, indem die Relativgeschwindigkeit zwischen dem stehenden Fahrzeug und dem Objekt bezüglich des stehenden Fahrzeugs berechnet wird, indem der Betrag und die Richtung des sich nähernden Objekts bestimmt wird, aus dem Vorzeichen der Relativgeschwindigkeit die Bewegungsrichtung des Objekts bestimmt wird und eine Warnung nur erfolgt, wenn das Vorzeichen der Relativgeschwindigkeit positiv ist und eine Kollision des sich von hinten nähernden Objekts mit der Tür zu erwarten ist.

Insbesondere beginnt der zu überwachende Seitenrückraum in Höhe der Fahrer- bzw. Beifahrertür, wobei die Überwachung nur einen Teil der jeweiligen Türfläche erfaßt.

Ein erfindungsgemäßes System zur Tür-Kollisions-Warnung, im folgenden als TKW-System bezeichnet, eines stehenden Kraftfahrzeugs ist in Anspruch 1 definiert.

Erfindungsgemäß umfaßt das TKW-System drei Systemelemente, wobei jedes Systemelement mehrere Elementwerte annehmen kann. In einer bevorzugten Ausführungsform nehmen die Elementwerte die Werte "aus", "standby" und "an" an. Insbesondere umfassen die Systemkomponenten ein Steuergerät, mindestens einen Sensor zur Überwachung mindestens des fahrerseitigen seitlichen Überwachungsrückraums des Kraftfahrzeugs und mindestens ein Peripheriegerät.

Die Anzahl der Systemzustände des TKW-Systems beträgt vorzugsweise fünf oder mehr. Dabei wird der Fall von fünf bzw. sechs Systemzuständen als bevorzugte Ausführungsformen im speziellen Beschreibungsteil näher erläutert.

Eine bevorzugte Ausführungsform der Erfindung wird nachfolgend anhand der Zeichnungen beschrieben. Dabei zeigt
- Fig. 1: eine schematische Darstellung der zu überwachenden Seitenrückraumbereiche eines stehenden Kraftfahrzeugs,
- Fig. 2: eine Darstellung der möglichen Systemübergänge in dem erfindungsgemäßen TKW-System, und
- Fig. 3: ein erfindungsgemäßes TWK-System in schematischer Darstellung.

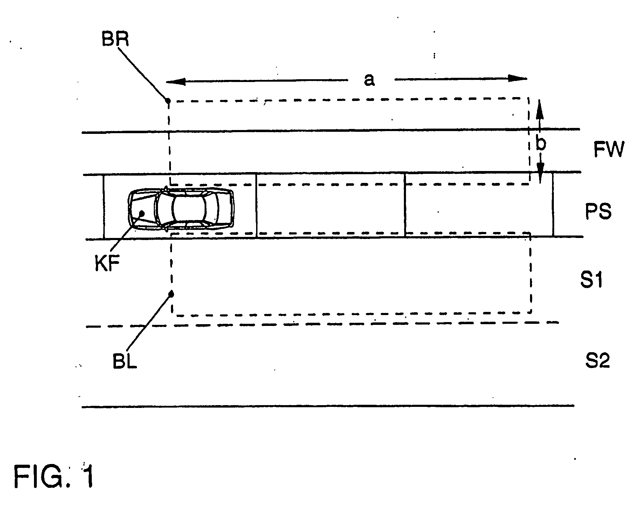

Fig. 1 zeigt ein auf einem Parkstreifen PS parkendes Kraftfahrzeug KF. Beifahrerseitig ist ein Rad- oder Fußweg FW dargestellt, während fahrerseitig eine Fahrspur S1 in Fahrtrichtung des Kraftfahrzeugs KF sowie eine zweite Fahrspur S2 in Gegenrichtung zu sehen ist. Das Kraftfahrzeug KF weist beidseitig etwa in der Höhe der Vordertüren Sensoren (nicht dargestellt) auf, die jeweils zu überwachende Seitenrückräume BL und BR definieren. Die Seitenrückräume BL und BR haben jeweils eine Breite b und eine Tiefe a, wobei die Breite b kleiner oder gleich 3m und die Tiefe a kleiner oder gleich 35m ist. Es ist auch möglich, die Sensoren in dem hinteren Stoßfänger anzuordnen, wodurch immer noch die zu überwachenden Seitenrückräume ausreichend, d.h. überwiegend, abgedeckt werden.

Das TKW-System wird durch eine Mehrzahl von Systemelementen gebildet, nämlich den Systemkomponenten, also dem Steuergerät, den Sensoren und notwendigen Peripheriegeräten, sowie der TK-Warneinheit und der Fehler-Warneinheit. Die Systemelemente haben eine vorgegebenen Wertebereich, im vorliegenden Fall die Elementwerte "aus", "standby" und "an". Der Wert "aus" bedeutet, daß das Systemelement im ausgeschalteten und nicht betriebsbereiten Zustand ist, der Wert "standby" bedeutet, daß das Systemelement im Standby-Modus befindet, d.h. eingeschaltet aber nicht betriebsbereit, und der Wert "an" bedeutet, daß das Systemelement sich im eingeschalteten und betriebsbereiten Zustand befindet.

Im vorliegenden Beispiel hat das TKW-System fünf Systemzustände, nämlich AUS, PASSIV, AKTIV, TK-WARNUNG (TK = Tür-Kollision) und FEHLER. Es sind jedoch auch mehr als die 5 genannten Systemzustände möglich, beispielsweise durch Unterteilung des Zustands PASSIV, worauf später eingegangen wird. Die Systemzustände sind aus der folgenden Tabelle I ersichtlich, wobei die eingeklammerten Elementwerte optionale Definitionen der Systemzustände angeben.

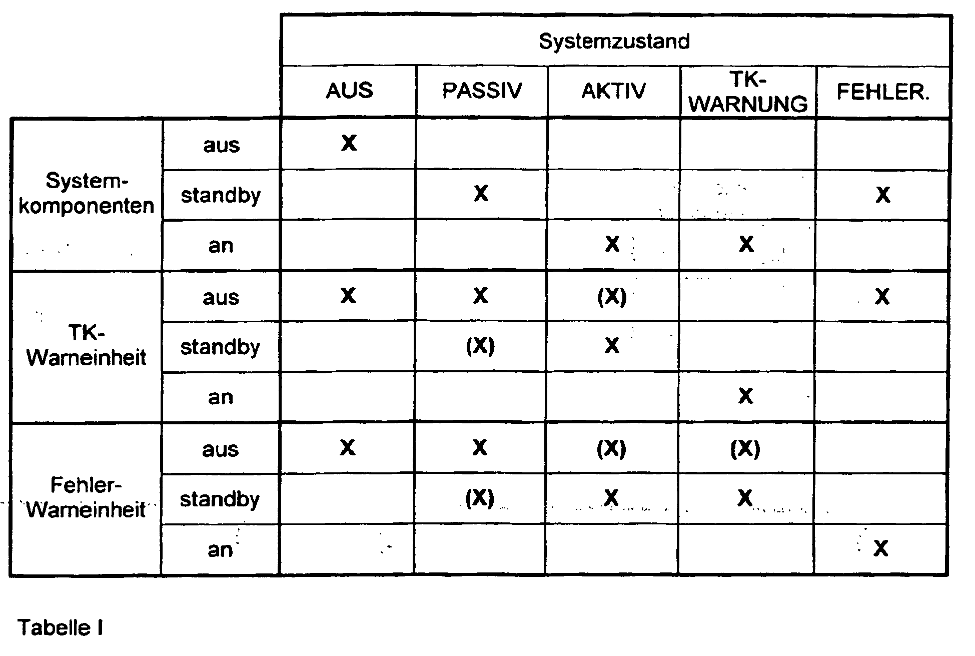

Die in Tabelle I dargestellten Systemzustände werden nachfolgend im Detail erläutert:
- AUS:: Alle Systemkomponenten (Steuergerät, Sensoren, Peripheriegeräte) sind abgestellt und stromlos. TK-Warneinheit und Fehler-Wameinheit sind abgestellt, also eine entsprechende Warnung ist nicht möglich.
- PASSIV:: Steuergerät und Sensoren sind im Standby Mode, d.h. in einem Zustand mit niedrigem Energieverbrauch. Nach Anforderung durch den Fahrer können diese Geräte schnell aktiviert werden.Die Sensorik ist ohne Abgabe von Licht-, Laser- oder Radarstrahlung. TK-Warneinheit und Fehler-Wameinheit sind abgestellt oder optional standby (eingeklammerter Wert), also eine entsprechende Warnung ist nicht möglich.
- AKTIV:: Steuergerät und Sensoren sind angestellt und in Betrieb. TK-Warneinheit und Fehler-Wameinheit sind im Standby-Mode oder optional ausgeschaltet (eingeklammerter Wert), d.h. eine Warnmeldung ist jederzeit möglich, erfolgt aber gerade nicht.
- TK-WARNUNG:: Steuergerät und Sensoren sind angestellt und in Betrieb. Fehler-Wameinheit ist im Standby-Mode oder optional ausgeschaltet (eingeklammerter Wert), d.h. eine Warnung vor einem Fehler ist jederzeit möglich, erfolgt aber gerade nicht.
Warnung der TK-Warneinheit erfolgt gerade.
- FEHLER:: Steuergerät und Sensoren sind im Standby Mode, d.h. in einem Zustand mit niedrigem Energieverbrauch.
Die Sensorik ist ohne Abgabe von Licht-, Laser- oder Radarstrahlung.
Die TK-Warneinheit ist abgestellt, also keine Warnung möglich.
Eine Warnung der Fehler-Wameinheit erfolgt gerade.

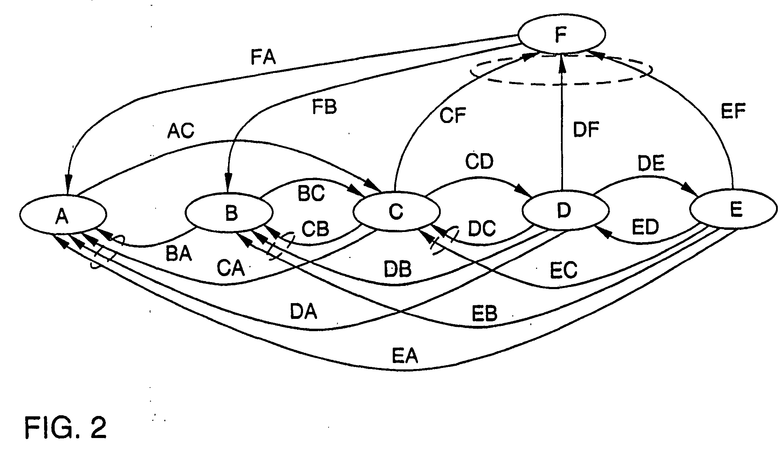

Fig. 2 zeigt anhand einer schematischen Übersicht einer bevorzugten Ausführungsform eines TKW-Systems mit 6 Systemzuständen, welche Übergänge zwischen den Systemzuständen erlaubt sind und unter welchen Bedingungen diese erfolgen können. Der Unterschied zu dem oben erläuterten System mit 5 Zuständen besteht in einer Aufspaltung des Zustands PASSIV in zwei Zustände PASSIV-1 und PASSIV-2. Weitere Systemzustände können definiert werden, so können beispielsweise auch die Zustände AKTIV und TK-WARNUNG ebenfalls aufgespalten werden. Die zweite Ausführungsform wird erläutert anhand der einzelnen Systemzustände AUS mit dem Bezugszeichen A, PASSIV-1 mit dem Bezugszeichen B, PASSIV-2 mit dem Bezugszeichen C, AKTIV mit dem Bezugszeichen D, TK-WARNUNG mit dem Bezugszeichen E und FEHLER mit dem Bezugszeichen F. Ferner bezeichnen entsprechende Zweier-Buchstabenkombinationen den jeweiligen Übergang zwischen entsprechenden Zuständen. Dabei identifiziert der erste Buchstabe den Ausgangszustand und der zweite Buchstabe den Endzustand des Übergangs.

Für Übergänge in den Zustand AUS gilt eine Besonderheit. Damit nach einem Ausschalten der Zündung, d.h. "Zündung aus", das System nicht sofort abgestellt wird, sondern noch eine begrenzte Zeit einsatzbereit bleibt, ist der Übergang in den Zustand AUS noch mit einer weiteren Bedingung verknüpft. Je nach Fahrzeugausstattung kann diese Bedingung unterschiedlich gestaltet sein. Hierfür einige Beispiele:
- Timer, welcher nach "Zündung aus" gestartet wurde, ist abgelaufen,
- Sitze sind nicht mehr belegt,und/oder
- Fahrzeug wurde von außen verriegelt.
Diese Bedingungen können auch miteinander verknüpft werden.

Bei alleinigem Einsatz einer Sitzbelegungserkennung als Bedingung müssen Personen eindeutig identifiziert werden können, so daß sie nicht mit schweren Gegenständen auf den Sitzen verwechselt werden. Würde dies geschehen, dann kann das System bei "Zündung aus" längere Zeit aktiviert bleiben und so die Fahrzeugbatterie entladen.

Ferner geht nach "Zündung ein" das System direkt in den Zustand "Aktiv", ohne dass der Taster betätigt werden muß.

Es gilt immer, daß zur Aktivierung des Systems die Zündung eingeschaltet sein muß. Eine Person, welche in das Auto einsteigt und wieder aussteigt, ohne die Zündung zu betätigen, wird vor einer möglichen Türkollision nicht gewarnt.

Eine weitere Möglichkeit besteht darin, daß das System nach einer De-Aktivierung von einem Türöffner oder einem anderen Sensor wieder aufgeweckt wird. Praktisch kann dies erfolgen, indem nach der Betätigung des Türöffners ein sog. Bus-Wake-Up erfolgt d.h. der CAN-Bus des Kraftfahrzeugs wird wieder aktiv und es werden über den CAN-Bus Daten ausgetauscht. Dies könnte das TKW-Steuergerät sensieren und sich wieder in den aktiven Zustand versetzen.

### Übergänge BA, CA, DA, EA, FA in den Zustand AUS:

Für alle Betriebszustände gilt: Bei "Zündung aus" und bei erfüllter Bedingung wie oben erläutert geht das System in den Zustand AUS.

### Übergänge DB, EB und FB in den Zustand PASSIV-1:

Für alle Betriebszustände außer für den Zustand AUS gilt: Bei Betätigung des Ein/Aus-Tasters geht das System in den Zustand PASSIV-1.

### Übergänge AC, BC, DC und EC in den Zustand PASSIV-2:

Das System geht in den Zustand PASSIV-2
- vom Zustand AUS nach dem Einschalten der Zündung, Übergang AC,
- vom Zustand PASSIV-1 nach Betätigung des Ein/Aus-Tasters, Übergang BC, und
- vom Zustand AKTIV und TK-WARNUNG, wenn das Fahrzeug fährt; Übergänge DC und EC.

### Übergänge CD und ED in den Zustand AKTIV:

- vom Zustand PASSIV-2, wenn das Fahrzeug steht, Übergang CD, und
- vom Zustand "TK-WARNUNG"; wenn kein anzuzeigendes Objekt im überwachten Seitenrückraumbereich delektiert wird.

### Übergang DE in den Zustand TK-WARNUNG:

Das System geht vom Zustand AKTIV in den Zustand TK-WARNUNG, wenn ein anzuzeigendes Objekt im überwachten Seitenrückraumbereich detektiert wird.

### Übergänge CF, DF und EF in den Zustand FEHLER:

Das System geht von den Zuständen PASSIV-2, AKTIV oder TK-WARNUNG in den Zustand FEHLER, wenn von einer der Systemkomponenten eine schwere Fehlermeldung vorliegt. Dabei hat eine Systemkomponente einen schweren Fehler, wenn ein sicherer Fahrbetrieb nicht mehr möglich ist. Beispiele dafür sind der Ausfall eines Sensors, der Ausfall der TK-Warnlampe und/oder der Ausfall des TK-Tongebers.

Die System-Zustände und die Systemübergänge werden dem Fahrer folgendermaßen angezeigt:

Im Zustand AUS erfolgt keine optische oder akustische Anzeige oder Warnung. Im Zustand PASSIV-1 und PASSIV-2 wird beispielsweise im Tachometer, Drehzahlmesser, Ein/Aus-Taster oder in der Konsole ein geeignetes rotes Symbol, beispielsweise in Form eines stilisierten Kraftfahrzeugs, angezeigt. Eine weitere optische oder akustische Anzeige oder Warnung erfolgt nicht.

Im Zustand AKTIV wird beispielsweise im Tachometer, Drehzahlmesser, Ein/Aus-Taster oder in der Konsole ein geeignetes grünes Symbol, beispielsweise in Form eines stilisierten Kraftfahrzeugs wie in den Zuständen PASSIV-1 oder PASSIV-2, angezeigt. Eine weitere optische oder akustische Anzeige oder Warnung erfolgt nicht.

Im Zustand TK-WARNUNG wird der Fahrer optisch z.B. über eine Lampe gewarnt. Diese Warnlampe muß so positioniert sein, dass sie beim Türöffnen im unmittelbaren Sichtbereich des Fahrers liegt (z.B. Spiegel, Tür-Dreieck oder A-Säule).

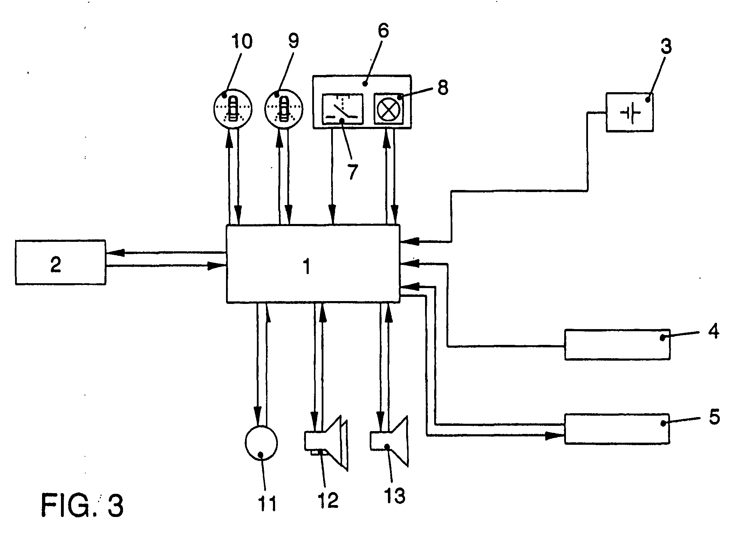

Fig. 3 zeigt eine Systemübersicht des TWE-Systems mit den Einzelkomponenten. Die eingetragenen Pfeile symbolisieren einen Informationsaustausch. Dieser kann z.B. über einen Datenbus oder Analyse von Strom/Spannungs-Kennlinien oder Kontrolle von Strom- oder Spannungspegeln erfolgen. Auch eine Integration von Elementen ist möglich, wie z.B. Steuergerät mit Sensor oder TW-Tongeber mit Fehler-Tongeber oder PASSIV-Anzeige mit AKTIV-Anzeige.

Dargestellt ist ein TKW-System mit einem Steuergerät 1, einer Sensorik 2, einer Spannungsquelle 3, einer Datenquelle 4 für Fahrzeugdaten und einem VAG-Tester 5 Ferner umfaßt das TKW-System einen Ein/Aus-Taster 6 mit einem Taster 7 und einer Beleuchtung 8, eine AKTIV-Lampe 9, eine PASSIV-Lampe 10, eine TK-Warnlampe 11, einen TK-Tongeber 12 und einen Fehler-Tongeber 13.

### Steuergerät

Die Hauptaufgaben des Steuergerätes 1 sind:
- Überwachung von Signallampen 9, 10, 11, den Tongebern 12,13, der Sensorik 2 und dem Ein/AusTaster 6 auf Funktionstüchtigkeit und Zustand,
- Ein- und Ausschalten der Signallampen, Tongeber und Sensorik,
- Einlesen von für das TWE-System wichtigen Fahrzeugdaten wie Tür auf/zu, Fahrzeug steht/fährt, Zündung ein/aus, usw. aus der Datenquelle 4,
- Erkennen und Schützen vor Überspannungen, Unterspannungen, Kurzschlüssen, Verpolungen ,
- Sensor-Messmodus einstellen und Sensor-Messdaten auslesen,
- Testfunktionen und Kommandos vom VAG-Tester 5 empfangen und ausführen, Eigenzustand und Fehler an den VAG-Tester übertragen,
- Spannungsversorgung angeschlossener Komponenten, sowie
- System-Eigendiagnose durchführen und Systemfehler anzeigen,
- Datenübertragungs- und Datenspeicherfehler erkennen und ggf. korrigieren,
- Objekte mit Hilfe der Sensor-Messdaten identifizieren,
- identifizierte Objekte verfolgen,
- relevante Objekte erkennen und vor diesen warnen.

### Sensorik 2:

Die Sensorik 2 kann z.B. als Radar-, Laser- oder Videosystem ausgeführt werden.
Die Hauptaufgaben der Sensorik sind:
- "Ausleuchten" der Fahrzeugumgebung,
- Reflexionssignale von Objekten in Fahrzeugnähe empfangen,
- Physikalische Objekt-Parameter wie z.B. Entfernung, Geschwindigkeit oder Winkel aus den Reflexionssignalen generieren,
- Physikalische Objekt-Parameter an das Steuergerät weiterleiten, und
- Eigendiagnose.

### Ein/Aus-Taster 6:

Der Ein/Aus-Taster 6 kann z.B. als Taster in der Konsole oder als Lenkstocktaster oder als Taster im Multifunktionslenkrad ausgeführt werden.

Wird der Taster in die Konsole eingebaut, dann wird dieser bei Einschalten des Parklichts durch eine LED 8 beleuchtet.

### TK-Warnlampe 11:

Die TK-Warnlampe kann mit einer oder mit mehreren LED's oder mit einer Glühlampe ausgeführt werden. Diese Warnlampe muß so positioniert sein, dass sie beim Türöffnen im unmittelbaren Sichtbereich des Fahrers liegt. Aufgeführt sind hier für den Spiegel auf der Fahrerseite einige Möglichkeiten:
- ein oder mehrere LED hinter halbtransparentem oder lokal transparentem Spiegel, links,
- ein oder mehrere LED hinter halbtransparentem oder lokal transparentem Spiegel, rechts,
- ganzflächige Beleuchtung des halbtransparenten Spiegels,
- Spalt zwischen Spiegel und Gehäuse beleuchtet,
- ein oder mehrere LED im Spiegelrahmen, links,
- ein oder mehrere LED oder Glühlampe im Spiegelrahmen, rechts,
- ein oder mehrere LED oder Glühlampe im Spiegelfuß,
- ein oder mehrere LED oder Glühlampe im Tür-Spiegeldreieck, und
- ein oder mehrere LED oder Glühlampe in A-Säule.

Die individuelle Gestaltung des Wamlichtes erfolgt anhand folgender Anforderungen:

Gute Erkennbarkeit: unter allen Lichtverhältnissen (Blendung durch Sonne, Gegenverkehr, rückwärtigen Verkehr) muß das Warnlicht gut erkennbar sein.

Gute Wahmehmbarkeit: beim Blick in den Spiegel muß das Warnlicht vom Fahrer gut wahmehmbar sein. Es sollte z.B. möglichst spiegelnah positioniert und kontraststark sein.

Allwettertauglich: bei allen Wetterbedingungen (Schnee, Regen, Eis) muß das Warnlicht gut erkennbar sein.

### Tongeber für TK-Wamung 12 und Fehler-Warnung 13

Idealerweise wird ein TK-Tongeber 12 benutzt, mit dem eine Links/Rechts-Unterscheidbarkeit darstellbar ist. Nach Möglichkeit sollen Tongeber anderer Systeme wie z.B. Einparkhilfe und Kombi-Instrument genutzt werden. Steht ein Tongeber zur Verfügung, welcher über das Steuergerät einstellbar ist, so kann dieser sowohl für TK-Warnung 21 als auch für Fehler-Warnung 13 genutzt werden.

### Symbolbeleuchtung Aktiv-Lampe 9 und Passiv-Lampe 10

Die Symbolbeleuchtungen der Aktiv-Lampe 9 und der Passiv-Lampe 10 zur Anzeige der Zustände AKTIV und PASSIV, die jeweils ein stilisiertes Fahrzeug darstellen, können über eine rote und eine grüne LED erfolgen. Beide LEDs können z.B. in einem Anzeigeelement integriert werden.

### Datenquelle 5 des Fahrzeugs

Voraussichtlich über den CAN-Bus empfängt das Steuergerät vom Fahrzeug zumindest folgende Daten:
- Fahrzeug steht/fährt
- Zündung ein/aus
- Parklicht ein/aus
- Tür auf/zu.
Die genauen CAN-Botschaften dieser Daten müssen fahrzeugspezifisch angepaßt werden.

### BEZUGSZEICHENLISTE

- KF: Kraftfahrzeug
- FW: Fußgänger/Fahrradweg
- PS: Parkstreifen
- S1: erste Fahrspur
- S2: zweite Fahrspur
- BR: fahrerseitiger (rechter) Überwachungsbereich
- BL: beifahrerseitiger (linker) Überwachungsbereich

- A: Systemzustand AUS
- B: Systemzustand PASSIV 1
- C: Systemzustand PASSIV 2
- D: Systemzustand AKTIV
- E: Systemzustand TW-WARNUNG
- F: Systemzustand FEHLER
Systemübergänge in den Zustand A:
BA, CA, DA, EA, FA
Systemübergänge in den Zustand B:
CB, DB, EB, FB
Systemübergänge in den Zustand C:
AC, BC, DC, EC
Systemübergänge in den Zustand D:
CD, ED
Systemübergänge in den Zustand E:
DE
Systemübergänge in den Zustand F:
CF, DF, EF
- 1: Steuergerät
- 2: Sensorik
- 3: Spannungsquelle
- 4: Datenquelle Fahrzeug
- 5: VAG-Tester
- 6: Ein/Aus-Taster
- 7: Taster
- 8: Beleuchtung
- 9: AKTIV-Lampe
- 10: PASSIV-Lampe
- 11: TK-Warnlampe
- 12: TK-Tongeber
- 13: Fehler-Tongeber

## Patentansprüche

1. System zur Tür-Kollisions-Warnung eines stehenden Kraftfahrzeugs von einer möglichen Kollision eines Objekts mit einer Fahrzeug für des Kraftfahrzeugs (KF), mit
- einem ersten Systemelement, das eine Sensorik (2) zur Übermachung mindestens des fahrerseitigen seit Lichen Übermachungs rückraums (BR) einer vorgegebenen Breite (b) und Tiefe (a) und zur Erfassung des Abstands und der Geschwindigkeit eines Objekts in dem zu überwachen den Seitenrückraum (BR, BL) und ein Steuergerät zur Auswertung der Sensorikdaten umfaßt, wobei Mittel zur Berechnung einer Warndistanz als Funktion der erfassten Objektgeschwindigkeit und einem vorgegebenen Gesamtreaktionszeit vorgesehen sind,
- einem zweiten Systemelement zur Ausgabe eines Warnsignals, wenn der erfaßte Objekt abstand Kleiner ist als die beredinete Warn distanz, und
- einem dritten Systemelement, das von einem Fehler einem Komponente der anderen Systemelemente warnt, wobei
- jedes Systemelement einen von mehreren Systemelementwerten annehmen kann, und
- das System eine vorgegebene Anzahl von Systemzuständen aufweist, deren Anzahl fünf oder mehr ist, wobei ein Systemzustand definiert ist durch die jeweiligen Systemelementwerte der einzelnen Systemelemente in dem jeweiligen Systemzustand, und wobei Übergänge zwischen jeweils zwei Systemzuständen vorgegeben sind.

2. System nach Anspruch 1, **dadurch gekennzeichnet, daß** die Anzahl der Elementwerte drei beträgt.

3. System nach Anspruch 2, **dadurch gekennzeichnet, daß** die Systemkomponenten ferner mindestens ein Peripheriegerät umfassen.

4. System nach einem der Ansprüche 1 bis 3, **dadurch gekennzeichnet, daß** das System sechs Systemzustände aufweist, die mit AUS, PASSIV-1, PASSIV-2, AKTIV, TK-WARNUNG und FEHLER bezeichnet sind.

5. System nach Anspruch 4, **dadurch gekennzeichnet, daß** das System mit dem Ausschalten der Zündung von allen Systemzuständen aus in den Systemzustand AUS übergeht.

6. System nach Anspruch 4 oder 5, **dadurch gekennzeichnet, daß** das System mit der Betätigung eines Ein/Aus-Tasters von allen Systemzuständen außer dem Zustand AUS in den Zustand PASSIV-1 übergeht.

7. System nach einem der Ansprüche 4 bis 6, **dadurch gekennzeichnet, daß** das System in den Zustand PASSIV-2 übergeht, wenn
im Zustand AUS die Zündung eingeschaltet wird,
im Zustand PASSIV-1 der Ein/Aus-Taster betätigt wird, oder
im Zustand AKTIV oder TK-WARNUNG das Fahrzeug sich in Bewegung setzt.

8. System nach einem der Ansprüche 4 bis 7, **dadurch gekennzeichnet, daß** das System in den Zustand AKTIV übergeht, wenn
im Zustand PASSIV-2 das Fahrzeug zum Stehen kommt,
im Zustand TK-WARNUNG keine anzuzeigenden Objekte detektiert werden.

9. System nach einem der Ansprüche 4 bis 8, **dadurch gekennzeichnet, daß** das System in den Zustand TK-WARNUNG übergeht, wenn
im Zustand AKTIV ein anzuzeigendes Objekt im überwachten Seitenrückraumbereich (BL, BR) detektiert wird.

10. System nach einem der Ansprüche 4 bis 9, **dadurch gekennzeichnet, daß** das System in den Zustand FEHLER übergeht, wenn
in den Zuständen PASSIV-2, AKTIV oder TK-WARNUNG eine entsprechende Fehlermeldung einer Komponente eines Systemelements vorliegt.

11. System nach einem der Ansprüche 1 bis 10, **dadurch gekennzeichnet, daß** die Systemzustände PASSIV-1, PASSIV-2, AKTIV, TK-WARNUNG und FEHLER optisch und/oder akustisch angezeigt werden.

12. System nach Anspruch 1, **dadurch gekennzeichnet, daß** das System eine Warnlampe (11) zur Ausgabe einer Warnung vor einer Tür-Kollision aufweist, die im Fahreraußenspiegel oder dessen Umgebung angeordnet ist.

## Claims

1. Door-collision warning system for a stationary motor vehicle for warning about a possible collision of an object with a vehicle door of the motor vehicle (KF), having
- a first system element which comprises a sensor system (2) for monitoring at least the monitored lateral rear area (BR) on the driver's side to a predefined width (b) and depth (a), and for sensing the distance from and the speed of an object in the lateral rear area (BR, BL) to be monitored, and a control device for evaluating the sensor data, means being provided for calculating a warning distance as a function of the sensed object speed and a predefined overall reaction time,
- a second system element for outputting a warning signal if the sensed object distance is smaller than the calculated warning distance, and
- a third system element which warns of a fault in a component of the other system elements,
- each system element being able to assume one of a plurality of system element values, and
- the system having a predefined number of system states whose number is five or more, a system state being defined by the respective system element values of the individual system elements in the respective system state, and transitions between two respective system states being predefined.

2. System according to Claim 1, **characterized in that** the number of element values is three.

3. System according to Claim 2, **characterized in that** the system components also comprise at least one peripheral device.

4. System according to one of Claims 1 to 3, **characterized in that** the system has six system states which are referred to by OFF, PASSIVE-1, PASSIVE-2, ACTIVE, TK-WARNING and FAULT.

5. System according to Claim 4, **characterized in that** when the ignition is switched off the system changes from all system states into the system state OFF.

6. System according to Claim 4 or 5, **characterized in that** when an on/off pushbutton switch is activated, the system changes from all the system states, apart from the state OFF, into the state PASSIVE-1.

7. System according to one of Claims 4 to 6, **characterized in that** the system goes into the state PASSIVE-2 if
the ignition is switched on in the state OFF,
the on/off pushbutton switch is activated in the state PASSIVE-1, or
the vehicle starts to move in the state ACTIVE or the state TK-WARNING.

8. System according to one of Claims 4 to 7, **characterized in that** the system goes into the state ACTIVE if
the vehicle comes to a standstill in the state PASSIVE-2,
no objects to be indicated or displayed are detected in the state TK-WARNING.

9. System according to one of Claims 4 to 8, **characterized in that** the system goes into the state TK-WARNING if
in the ACTIVE state an object to be indicated or displayed is detected in the monitored lateral rear area (BL, BR).

10. System according to one of Claims 4 to 9, **characterized in that** the system goes into the state FAULT if
a corresponding fault message of a component of a system element is present in the states PASSIVE-2, ACTIVE or TK-WARNING.

11. System according to one of Claims 1 to 10, **characterized in that** the system states PASSIVE-1, PASSIVE-2, ACTIVE, TK-WARNING and FAULT are displayed visually and/or indicated audibly.

12. System according to Claim 1, **characterized in that** the system has a warning lamp (11) for outputting a warning before a door collision which is arranged in the driver's exterior rear view mirror or its surroundings.

## Revendications

1. Système pour alerter de la collision d'une portière d'un véhicule automobile à l'arrêt avant une collision possible d'un objet avec une portière de véhicule du véhicule automobile (KF) comprenant
- un premier élément de système qui englobe un détecteur (2) pour surveiller au moins l'espace arrière surveillé (BR, BL) latéral côté conducteur ayant une largeur (b) et une profondeur (a) prédéfinies et pour détecter la distance et la vitesse d'un objet dans l'espace arrière latéral à surveiller (BR, BL) ainsi qu'un appareil de commande pour interpréter les données du détecteur, des moyens de calcul d'une distance d'alerte en fonction de la vitesse détectée de l'objet et d'un temps de réaction total étant prévus,
- un deuxième élément de système pour délivrer un signal d'alerte lorsque la distance détectée de l'objet est inférieure à la distance d'alerte calculée et
- un troisième élément de système qui alerte en cas de défaut d'un composant des autres éléments de système,
- chaque élément de système pouvant prendre une parmi plusieurs valeurs d'élément de système et
- le système présentant un nombre prédéfini d'états du système dont le nombre est de cinq ou plus, un état du système étant défini par les valeurs d'élément de système respectives de chacun des éléments de système dans l'état du système correspondant et des transitions étant prédéfinies entre à chaque fois deux états du système.

2. Système selon la revendication 1, **caractérisé en ce que** le nombre de valeurs d'élément est de trois.

3. Système selon la revendication 2, **caractérisé en ce que** les composants du système comprennent en plus au moins un périphérique.

4. Système selon l'une des revendications 1 à 3, **caractérisé en ce que** le système présente six états du système qui sont désignés par ARRÊT, PASSIF-1, PASSIF-2, ACTIF, ALERTE CP et DÉFAUT.

5. Système selon la revendication 4, **caractérisé en ce que** le système, lors de la coupure du contact d'allumage, passe à l'état du système ARRÊT, et ce depuis tous les états du système.

6. Système selon la revendication 4 ou 5, **caractérisé en ce que** le système, lors de l'actionnement d'une touche Marche/Arrêt, passe à l'état du système PASSIF-1, et ce depuis tous les états du système sauf l'état ARRÊT.

7. Système selon l'une des revendications 4 à 6, **caractérisé en ce que** le système passe à l'état PASSIF-2 lorsque dans l'état ARRÊT le contact est mis, lorsque dans l'état PASSIF-1 la touche Marche/Arrêt est actionnée ou lorsque dans l'état ACTIF ou ALERTE CP le véhicule se met en mouvement.

8. Système selon l'une des revendications 4 à 7, **caractérisé en ce que** le système passe à l'état ACTIF lorsque dans l'état PASSIF-2 le véhicule s'immobilise, lorsque dans l'état ALERTE CP aucun objet à signaler n'est détecté.

9. Système selon l'une des revendications 4 à 8, **caractérisé en ce que** le système passe à l'état ALERTE CP lorsque dans l'état ACTIF un objet à signaler est détecté dans la zone de l'espace arrière latéral surveillée (BL, BR).

10. Système selon l'une des revendications 4 à 9, **caractérisé en ce que** le système passe à l'état DÉFAUT lorsque dans les états PASSIF-2, ACTIF ou ALERTE CP, il existe un message d'erreur correspondant d'un composent d'un élément de système.

11. Système selon l'une des revendications 1 à 10, **caractérisé en ce que** les états du système PASSIF-1, PASSIF-2, ACTIF, ALERTE CP et DÉFAUT sont indiqués de manière visuelle et/ou sonore.

12. Système selon 1a revendication 1, **caractérisé en ce que** le système présente un témoin d'alerte (11) pour émettre une alerte avant une collision de la portière, lequel est disposé dans le rétroviseur extérieur du véhicule ou dans son environnement.
